# EUROPÄISCHE PATENTANMELDUNG

(11) **EP 0 597 326 A2**
(43) Veröffentlichungstag der Anmeldung: **18.05.1994**
(21) Anmeldenummer: 93117464.3
(22) Anmeldetag: 28.10.1993
(51) Int. Cl.: B05D 5/06, C09D 5/36

(54) **Verfahren zum Beschichten mit glanzpigmenthältigen Polymeren**

(30) Priorität: 13.11.1992 DE 4238380
(71) Anmelder: MERCK PATENT GmbH, D-64293 Darmstadt (DE)
(72) Erfinder: Kieser, Manfred, Dr., D-64291 Darmstadt (DE); Hennemann, Alfred, D-65934 Frankfurt (DE)

(57) **Zusammenfassung**

Die vorliegende Erfindung betrifft ein Verfahren zum Beschichten von Substratmaterialien mit Glanzpigment-haltigen Polymeren, wobei auf ein Substrat eine thermoplastische Lackschicht appliziert wird und darauf eine Schicht aus Glanzpigmenten bzw. Glanzpigmentgemischen und gegebenenfalls eine Klarlackschicht aufgebracht wird.

## Beschreibung

Die vorliegende Erfindung betrifft ein Verfahren zum Beschichten von Substratmaterialien mit Glanzpigment-haltigen Polymeren, wobei auf ein Substrat eine thermoplastische Lackschicht appliziert wird und darauf eine Schicht aus Glanzpigmenten bzw. Glanzpigmentgemischen und gegebenenfalls eine Klarlackschicht aufgebracht wird.

Beschichtungen werden im allgemeinen durch Applikation vollständiger Beschichtungsmassen erzeugt, d.h. von Beschichtungssystemen, die bei der Applikation alle notwendigen Bestandteile, wie z.B. Bindemittel, Pigmente, Füllstoffe, Additive, Lösemittel etc. einer Beschichtung enthalten.

Für gewisse Anwendungen sind andere Verfahren bekannt, bei denen Binder und Effektstoff getrennt angewendet werden, wie z.B. Beflocken, Bestreuen, Faserspritzen usw.

Beschichtungen, die mit flüssigen oder pulverförmigen Lacken ausgeführt sind, werden als komplette Systeme angewendet. In manchen Fällen kann dies allerdings zu großen anwendungstechnischen Problemen führen, wie z.B. bei Pulverlacken, die Perlglanzpigmente oder Metalleffektpigmente enthalten.

Bei der Herstellung von Pulverlacken werden alle Bestandteile in Extrudern in der Schmelze gemischt und der extrudierte stückige Pulverlack als festes Material einer Mühle zugeführt. Dort wird der Pulverlack auf die für die Anwendung notwendige Teilchengröße gemahlen.

Bei diesem Mahlprozeß wird ein großer Teil der Glanzpigmentplättchen zerstört, was zu einer Minderung des Glanzeffektes führt.

Es bestand daher die Aufgabe ein Beschichtungsverfahren zu finden, bei dem Perlglanzpigment- und/oder Metalleffektpigment-haltige Polymerbeschichtungen obengenannte Nachteile nicht aufweisen.

Diese Aufgabe wurde durch die vorliegende Erfindung gelöst. Es wurde nämlich gefunden, daß wenn man auf ein Substrat eine zumindest zeitweise thermoplastische pigmentierte oder unpigmentierte Lackschicht appliziert und darauf ein Glanzpigment oder Glanzpigmentgemisch und eventuell einen Klarlack aufträgt, die thermoplastische oder aber beide Lackschichten aufschmilzt und eventuell aushärtet, optimale Glanzeffekte bei Lacken und Beschichtungsmassen, insbesondere Pulverlacken, erzielt werden können.

Gegenstand der Erfindung ist daher ein Verfahren zum Beschichten von Substratmaterialien mit Glanzpigment-haltigen Polymeren, dadurch gekennzeichnet, daß zunächst eine thermoplastische oder kurz nach der Applikation noch thermoplastische Lackschicht auf das Substrat appliziert wird und darauf eine Schicht aus Glanzpigmenten in Pulverform und gegebenenfalls zusätzlich eine Klarlackschicht aufgebracht wird und danach die thermoplastische oder aber beide Lackschichten aufgeschmolzen und eventuell ausgehärtet werden.

Die erfindungsgemäßen Beschichtungen können auf beliebige Substratmaterialien, beispielsweise Metalle wie Eisen, Stahl, Aluminium, Kupfer, Bronze, Messing sowie Metallfolien aber auch andere metallüberzogene Oberflächen wie Glas, Keramik und Beton, als auch auf Holz z.B. Möbel, Ton, Papier, Verpackungsmaterialien, z.B. Kunststoffbehälter, Folien oder Pappen, oder andere Materialien zu dekorativen und/oder schützenden Zwecken aufgebracht werden.

Zur Beschichtung können alle üblichen Lacksysteme, die zumindest zeitweise thermoplastische Eigenschaften aufweisen, eingesetzt werden, wobei unter Lacksystem hier alle Lösungsmittel-/Bindemittel-Systeme oder auch lösungsmittelfreie Bindemittelsysteme verstanden werden, mit denen durch physikalische oder chemische Methoden, z.B. Trocknen bei Raumtemperatur oder erhöhten Temperaturen bis zu etwa 200 °C, chemische oder durch Strahlung, z.B. UV-Strahlung, induzierte Vernetzung und/oder Polymerisation sowie andere übliche Behandlungsmethoden glatte, fest, glänzende und gut haftende Filme gebildet werden können. Vorzugsweise werden Pulverlacke verwendet.

Als Bindemittel können dabei zum Beispiel Naturharze, z.B. Kolophonium, Dammar, Kopale und Schellack, Bindemittel auf Basis trockener, pflanzlicher und tierischer Öle, Celluloseester, Kondensationsharze mit Formaldehyd, Polyester, Polyamide, Polyvinylharze, Acryl- und Methacrylharze und Polyurethane und Epoxidharze eingesetzt werden.

Eine Übersicht über geeignete Bindemittel findet sich beispielsweise in H. Kittel, Lehrbuch der Lacke und Beschichtungen, Band I, Teil 1, 2 und 3 sowie Karsten; Lackrohstofftabellen, 9. Auflage, S. 55-558.

Je nach dem zu beschichtenden Substrat und dem Verwendungszweck kann der Fachmann aufgrund seines Fachwissens ein geeignetes Bindemittel auswählen.

Diese Bindemittel werden in der Regel zusammen mit organischen Lösungsmitteln, z.B. aliphatischen oder aromatischen Kohlenwasserstoffen, Terpenen, Chlorkohlenwasserstoffen, Alkoholen, Ketonen, Estern, Ethern und Glykolethern, oder auch in wäßriger Dispersion eingesetzt, wobei wohl sogenannte low solid - (10-30 % Festkörper), medium solid - (30-60 % Festkörper) als auch high solid (60-80 % Festkörper) Formulierungen zur Anwendung kommen. Die angegebenen Festkörpergehalte können jedoch auch über- oder unterschritten werden, wobei Formulierungen bis zu 100 % Festkörper möglich sind (Pulverlacke).

Eine Zusammenstellung von üblicherweise eingesetzten Lösungsmitteln findet sich im Ullmann: Enzyklopädie der technischen Chemie, 4. Auflage, Band 16, S. 296-308 sowie H. Kittel: Lehrbuch der Lacke und Beschichtungen, Band III, S. 72-134 und Karsten: Lackrohstofftabellen, 9. Auflage, S. 601-619. Eine Zusammenstellung üblicher Bindemittel/Lösungsmittel-Systeme findet sich auch im US-Patent 4,551,491 und in den europäischen Patentanmeldungen EP 0 473 033 A1 und EP 0 475 108 sowie der darin zitierten Literatur.

Als Glanzpigmente werden bei der erfindungsgemäßen Beschichtung Metalleffektpigmente wie z.B. plättchenförmiges Eisenoxid, Aluminiumplättchen sowie Perlglanzpigmente - mit Metalloxiden beschichtete Glimmerschuppenpigmente - eingesetzt. Letztere sind z.B. aus den deutschen Patenten und Patentanmeldungen 14 67 468, 19 59 998, 20 09 566, 22 14 545, 22 15 191, 22 44 298, 23 13 331, 25 22 572, 31 37 808, 31 37 809, 31 51 343, 31 51 354, 31 51 355, 32 11 602, 32 35 017, 33 34 598 und 35 28 256 bekannt.

Die Schicht aus Glanzpigmenten kann nur aus Metalleffektpigmenten bzw. Perlglanzpigmenten, aber auch aus einem Perlglanz-/Metalleffektpigment-Gemisch bestehen.

Wesentlicher Bestandteil der Beschichtung ist das Glanzpigment, das in dünner Schicht auf dem zuerst auf dem Substrat erzeugten thermoplastischen Lackfilm aufgebracht wird. Dabei sind Pigmentschichten von 0,1-20 g/m², vorzugsweise 1-10 g/m² besonders geeignet.

Im folgenden wird das Verfahren eingehend beschrieben. Im ersten Schritt wird eine aufschmelzbare Lackschicht, insbesondere ein Pulverlack in einer Dicke von etwa 5-50 µm, vorzugsweise 10-30 µm, auf das zu beschichtende Substratmaterial appliziert, so daß die Substratoberfläche vollständig mit einem homogenen Lackfilm abgedeckt ist. Auf das beschichtete Substrat wird das Glanzpigment bzw. Glanzpigmentgemisch nach einem gängigen Verfahren z.B. Wirbelbett, Pinseln, Sprühen, Rieseln, Tauchen aufgebracht. Eventuell muß ein Pigmentüberschuß mechanisch entfernt werden. Durch optimale Prozeßlenkung ist dieses aber in den meisten Fällen nicht nötig. Die gesamte Grundbeschichtung wird anschließend bei Temperaturen im Bereich von 50 bis 250 °C, bevorzugt 80-200 °C, aufgeschmolzen und ggf. ausgehärtet.

Auf diese Effektlackschicht können dann noch eine oder auch mehrere Klarlackschichten z.B. Wasserlack, Pulverlack zur Verbesserung der Oberflächenqualität als Decklack aufgebracht werden, wodurch in der Regel noch eine Verbesserung sowohl des Aussehens als auch der Haltbarkeit der Gesamtlackierung erzielt wird. Der transparente Schlußlack ist jedoch nicht unbedingt notwendig.

Das Aufschmelzen und eventuell Aushärten von Grundbeschichtung und Klarlackschicht kann aber auch gleichzeitig erfolgen.

Die Lackschichten werden jeweils in einem oder mehreren Gängen nach üblichen Methoden, wie z.B. Spritzen oder Tauchen aufgebracht, wobei die Grundbeschichtung eine Dicke von etwa 5-50 µm, bevorzugt etwa 10-30 µm, und die gegebenenfalls aufgebrachte Klarlackschicht eine Dicke von etwa 20-250 µm, bevorzugt 50-150 µm, aufweist.

Man erhält Beschichtungen mit interessanten glänzenden coloristischen Effekten, da die Glanzpigmentteilchen innerhalb der Beschichtung sehr gut orientiert werden. Da jede der zwei bzw. drei Systemkomponenten - Grundbeschichtung, Perlglanzpigment und Schlußlack - unabhängig voneinander verändert werden kann, ist eine große coloristische Vielfalt möglich.

Bei der Verwendung von Pulverlacken sind alle zwei oder drei Systemkomponenten voll recyclefähig, da durch geeignete Prozeßführung eine Vermischung der Einzelkomponenten vermieden werden kann.

Die folgenden Beispiele sollen die Erfindung erläutern, ohne sie zu begrenzen:

### Beispiel 1

Teodur PUR 00013 farblos, Pulverlack der Fa. Teodur NV Breda NL, wird elektrostatisch auf ein Aluminiumblech appliziert und bei ca. 100 °C zu einem noch nicht durchgehärteten Film aufgeschmolzen (Schichtdicke ca. 50 µm). Anschließend wird Iriodin 504 (mit Fe₂O₃-beschichtetes Glimmerpigment der Teilchengröße 10-60 µm der Fa. E. Merck, Darmstadt) in dünner Schicht, d.h. 3 g/m², ebenfalls elektrostatisch aufgebracht. Das beschichtete Aluminiumblech wird bei 180 °C innerhalb 15 Minuten ausgehärtet.

Man erhält eine brillante, metallisch glänzende Beschichtung.

### Beispiel 2

Auf das aus Beispiel 1 erhaltene beschichtete Aluminiumblech wird zusätzlich noch ein klarer, hochglänzender Pulverlack (Teodur PUR 00013, farblos der Fa. Teodur) aufgebracht und bei 180 °C innerhalb 15 Minuten eingebrannt.

Man erhält eine brillante, metallisch hochglänzende Beschichtung.

### Beispiel 3

Interpon 600 transparent, Pulverlack der Fa. International Powder Coating wird analog Beispiel 1 auf ein Aluminiumblech appliziert und bei ca. 100 °C zu einem noch nicht durchgehärteten Film aufgeschmolzen. Im folgenden Schritt wird Iriodin 504 (mit Fe₂O₃ beschichtetes Glimmerpigment der Teilchengröße 10-60 µm der Fa. E. Merck, Darmstadt) in dünner Schicht (ca. 5 g/m²) durch Sprühen aufgebracht. Anschließend erfolgt eine nochmalige Beschichtung mit dem Klarlackpulver Interpon 600 transparent. Das beschichtete Blech wird bei 180 °C innerhalb 15 Minuten ausgehärtet.

Man erhält eine brillante, metallisch hochglänzende Beschichtung.

### Beispiel 4

Interpon 600 schwarz, Pulverlack der Fa. International Powder Coating wird analog Beispiel 1 auf ein Aluminiumblech appliziert und bei ca. 100 °C zu einem noch nicht durchgehärteten Film aufgeschmolzen. Im folgenden Schritt wird eine Schicht von 2 g/m² eines plättchenförmigen pulverförmigen Aluminium-Pigments (Standort Aluminiumpulver Spezial PC 20 der Fa. Eckart) durch Sprühen aufgebracht. Anschließend erfolgt eine Beschichtung mit Interpon 600 transparent, Klarlackpulver der Fa. International Powder Coating. Das beschichtete Blech wird bei 180 °C innerhalb 15 Minuten ausgehärtet.

Man erhält eine brillante, dunkel-metallisch glänzende Beschichtung mit hohem Oberflächenglanz.

## Patentansprüche

**1.** Verfahren zum Beschichten von Substratmaterialien mit Glanzpigment-haltigen Polymeren, dadurch gekennzeichnet, daß zunächst eine oder aber kurz nach der Applikation noch thermoplastische Lackschicht auf das Substrat appliziert wird und darauf eine Schicht aus Glanzpigmenten in Pulverform und gegebenenfalls zusätzlich eine Klarlackschicht aufgebracht wird und danach die noch thermoplastische oder aber beide Lackschichten aufgeschmolzen und eventuell ausgehärtet werden.

**3.** Verfahren nach Anspruch 1, dadurch gekennzeichnet, daß die Beschichtung 0,1 bis 20 g/m² an Glanzpigmenten enthält.

**3.** Verfahren nach Anspruch 1, dadurch gekennzeichnet, daß die zunächst noch thermoplastische Lackschicht bei Temperaturen von 50 bis 250 °C aufgeschmolzen wird.

**4.** Verfahren nach Anspruch 1, dadurch gekennzeichnet, daß der zunächst noch thermoplastische Lack ein Pulverlack ist.

**5.** Verfahren nach Anspruch 1, dadurch gekennzeichnet, daß der Klarlack ein Pulverlack ist.

**6.** Verfahren nach Anspruch 1, dadurch gekennzeichnet, daß das Glanzpigment ein Perlglanzpigment ist.

**7.** Verfahren nach Anspruch 1, dadurch gekennzeichnet, daß das Glanzpigment ein Metalleffektpigment ist.
